# EUROPEAN PATENT SPECIFICATION

(11) **EP 1 829 847 B1**
(45) Date of publication and mention of the grant of the patent: **19.02.2020**
(21) Application number: 06256473.7
(22) Date of filing: 20.12.2006
(51) Int. Cl.: C04B 41/87, C04B 41/89, C23C 24/08, F01D 5/28

(54) **Method for depositing a protective coating**
Verfahren zur Herstellung einer Schutzschicht
Procédé de dépôt d'un revêtement protecteur

(30) Priority: 01.03.2006 US 366768
(43) Date of publication of application: 05.09.2007
(73) Proprietor: United Technologies Corporation, Farmington, CT 06032 (US)
(72) Inventor: Tulyani, Sonia, Manchester, CT 06040 (US); Bhatia, Tania, Middletown, CT 06457 (US); Smeggil, John G., Simsbury, CT 06060 (US)
(74) Representative: Dehns

(56) References cited:
- WO-A1-2007/073983
- US-A- 5 840 433
- US-A1- 2004 192 536
- US-A1- 2005 249 977

## Description

### FIELD OF USE

The present disclosure relates to protective coatings and, more particularly, relates to a cost effective process for preparing and applying protective coatings of tailored density effective at limiting the damaging environmental effects and/or providing thermal protection and thereby extending service life of gas turbine engine components.

### BACKGROUND OF THE INVENTION

In the known scientific literature, environmental barrier coatings (EBCs) are coatings used to prevent the volatilization of Si-species from a silicon containing substrate, e.g., U.S.P.N. 6,387,456 to Eaton et. al. Thermal barrier coatings (TBCs) are used for the thermal protection of metal substrates, e.g., Ni-based superalloys, etc., in various applications such as those described in an article by D.R.Clarke and C.G.Levi, Annual Review of Materials Research, 20003, Vol. 33, pp. 383-417. Often an EBC will also act as a TBC and vice versa. TBCs/EBCs are also used for the protection of certain oxide/oxide ceramic composites as described in U.S.P.N. 7,001,679 to Campbell and Lane. While a large number of issued and published patents describe environmental and thermal barrier compositions, there is a relative scarcity of methods directed to applying such protective coatings to complex shaped parts that are difficult to coat by line of sight methods. Often gas turbine engine components, heat exchangers, etc. have complex shapes and are difficult to coat by coating methods known in the art such as thermal spray and electron-beam physical vapor deposition.

Suitable coating processes for such complex shaped parts must provide thick, dense coatings of 1-100 mils (0.025-2.54mm) at a low cost and rapid production rate. Both plasma spraying and physical vapor deposition processes are line of sight processes are not practical for rapidly coating complex geometries. A non-line of sight process often used to provide dense coatings is chemical vapor deposition ("CVD"). Although this technique provides thick, dense coatings, CVD processes are expensive, slow and require a great deal of process development and operator skill. Alternatives to CVD are highly desirable because the process uses environmentally unfriendly chemical precursors and often generates waste products that require extensive clean-up.

Recently, a coating process involving electrophoretic deposition ("EPD") as a non-line of sight method was disclosed in U.S. Publ. No. 2006/0029733A1. EPD processes cannot be easily applied and require an electrically conductive substrate and a complex electrode design to deposit uniform coating(s) upon the substrates.

Another coating process involves sol-gel. Sol-gel processes are often used to coat complex shaped substrates. Sol-gel processes produce dense coatings in a rapid and inexpensive manner. However, the thickness of coatings deposited from sol-gel processes is limited which makes the process unsuitable where the coating must be thick and dense enough to withstand exposure to harsh environmental conditions.

Yet another coating process involves dip coating. Dip coating is recognized as a suitable, cost efficient process for depositing protective coatings upon complex shaped substrates as disclosed in the article entitled "Tailored Rheological Behavior of Mullite and BSAS Suspensions using a Cationic Polyelectrolyte" by Armstrong, Beth, et al., American Society of Mechanical Engineers, Paper GT 2005-68491, presented in Reno, Nevada (June, 2005). Generally, dip coating processes are non-line-of-sight and do not require expensive or complex equipment. However, current dip coating processes produce coatings that often exhibit poor adhesion and non-uniformity in thickness.

In traditional slurry-based ceramic processing the sintering temperatures of ceramics are usually 0.7-0.8 Tₘ, where Tₘ is the homologous melting temperature of the ceramic. Sintering of the ceramic imparts good cohesive strength to the ceramic by promoting densification. However, in the case of ceramic coatings, such as EBCs and TBCs, on metals or ceramic components, it is not possible to heat the article to the high temperatures required to promote acceptable densification of the ceramic coating material because of various material constraints, e.g., such as the likely melting of bond layer and or metal component. The low sintering temperatures also limit the adhesion of the coatings. Presently, it is recognized that high processing temperatures are necessary in order to improve poor adhesion. However, the physical properties of the intended substrates prevent utilizing these requisite high processing temperatures.

Consequently, there exists a need for a cost effective process for preparing and applying coatings that act as barriers to corrosive environments, providing a thermal barrier function and extending the service life of complex shaped parts in all applicable industries.

Various coating compositions are disclosed in WO 2007/073983 A1, US 2004/192536 A1, US-A-5480433 and US 2005/249977.

### SUMMARY OF THE INVENTION

In accordance with a first aspect of the present invention, there is provided a method for depositing a protective coating upon a substrate as set forth in claim 1.

The details of one or more embodiments of the invention are set forth in the accompanying drawings and the description below. Other features and advantages of the invention will be apparent from the description and drawings, and from the claims.

### BRIEF DESCRIPTION OF THE DRAWINGS

FIG. 1 is a representation of a portion of a substrate coated with an optional bond coat layer, an optional intermediate layer and a protective top coat layer;
FIG. 2 is a representation of a portion of a substrate coated with an optional bond coat layer and a protective top coat layer;
FIG. 3 is a representation of a portion of a substrate coated with a protective top coat layer; and
FIG. 4 is a flow chart depicting a method for depositing a protective coating on a complex shaped substrate.

Like reference numbers and designations in the various drawings indicate like elements.

### DETAILED DESCRIPTION

The present invention relates to a method for depositing a protective coating upon a substrate of a gas turbine engine component. The protective coating inhibits the formation of gaseous species of silicon when the article is exposed to a high temperature, combustion environments. The protective coating may serve as an environmental barrier layer, a thermal barrier layer or a chemical barrier layer.

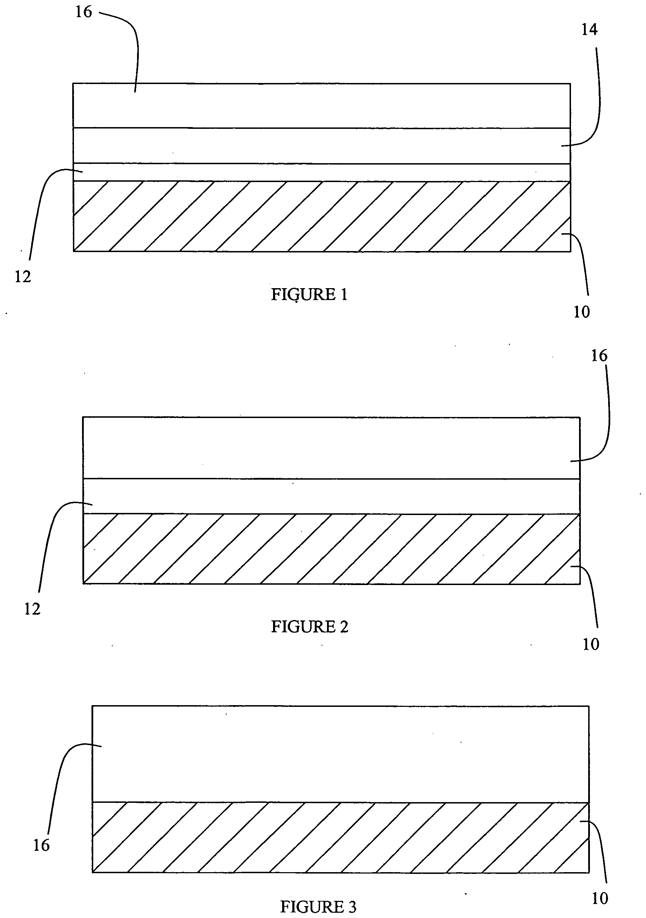

Referring to FIGS. 1-3, a portion of a complex shaped part is represented by a substrate 10. As used herein, the term "complex shaped part" means a part whose shape and geometry are not conducive to being coated by conventional line-of-sight methods known to one of ordinary skill in the art. Various industries employ complex shaped parts and all of these complex shaped parts may be coated using the methods of the present invention. For example, aircraft engine manufacturers may utilize the methods of the present invention to coat complex shaped parts such as vanes, rotors blades, combustor liners, shrouds, transition ducts, airfoils, and substantially tubular gas turbine components. Many other complex shaped turbine engine and turbomachinery components may be coated using the methods of the present invention. For example, an integral vane assembly which consists of a set of 8 to 20 vanes with integral outer and inner platforms, including multiple airfoils mounted between platforms and integral turbine blade assemblies, may all be coated using the methods of the present invention.

Generally, the substrate 10 may comprise a ceramic material, a metal-based material, combinations comprising at least one of the foregoing, and the like. For example, substrate 10 may include, but is not limited to, high temperature iron alloys and steels, Ni-based superalloys, silicon-containing ceramics, silicon-containing metal alloys, and oxide-oxide containing materials. Suitable silicon-containing ceramics may include, but are not limited to, silicon nitride, silicon carbide, silicon carbide composites, silicon nitride composites, silicon oxynitrides, silicon aluminum oxynitrides, silicon nitride ceramic matrix composites, combinations comprising at least one of the foregoing, and the like. Suitable silicon-containing metal alloys may include, but are not limited to, molybdenum silicon alloys, niobium silicon alloys, iron silicon alloys, cobalt silicon alloys, nickel silicon alloys, tantalum silicon alloys, refractory metal silicides, combinations comprising at least one of the foregoing, and the like. Suitable oxide-oxide materials may include, but are not limited to, fiber reinforced oxide matrix composites where the fiber reinforcements may include, but are not limited to, silicon carbide, silicon nitride, alumina, mullite, combinations comprising at least one of the foregoing oxide-oxide materials, and the like; and, the oxide matrix may include, but are not limited to, alumina, zirconia, mullite, comparable refractory oxides, combinations comprising at least one of the foregoing, and the like.

Referring again to FIGS. 1-3, a bond coat layer 12 may optionally be disposed onto the surface of substrate 10. Bond coat layer 12 may comprise at least one metal-based composition suitable for use with the silicon-containing substrate materials. Suitable bond coat layer materials may include, but are not limited to, silicon, hafnium oxide, hafnium silicon oxide, combinations comprising at least one of the foregoing, and the like. An intermediate layer 14 may optionally be disposed onto the bond coat layer 12. Intermediate layer 14 may comprise at least one metal-based composition suitable for use with the silicon-containing substrate materials. Suitable intermediate layer materials may include, but are not limited to, HfSiO₄, BaSiO₃, SrSiO₃, aluminum silicate, yttrium silicate, rare earth silicates, mullite and alkaline earth aluminosilicates of barium and strontium.

A protective layer 16 is disposed upon the substrate 10, or if present, upon the bond coat layer 12 or the intermediate layer 14. The protective layer 16 may comprise 50 to 100 mol. % of at least one refractory metal oxide. Any refractory metal oxide may be employed, for example, hafnium oxide and/or monoclinic hafnium oxide. In addition, the protective layer 16 may further comprise up to 50 mol. % of at least one other refractory metal oxide having at least one metal selected from the group comprising Zr, Ti, Nb, Ta, Ce and mixtures thereof. In other embodiments, the protective layer 16 may further comprise up to 50 mol. % of at least one other refractory metal oxide having a metal selected from the group comprising rare earth elements, Y, Sc, Al, Si and mixtures thereof. In other embodiments, the protective layer 16 may further comprise up to about 50 mol. % of at least one other refractory metal oxide having a metal selected from the group comprising Ba, Sr, Si, Al and mixtures thereof. In other embodiments, the protective layer may further comprise up to 50 mol. % of at least one other refractory metal oxide or at least one silicate having a metal selected from the group comprising rare earth elements, Y, Sc, La, Gd, Sm, Lu, Yb, Er, Pr, Pm, Dy, Ho, Eu and mixtures thereof.

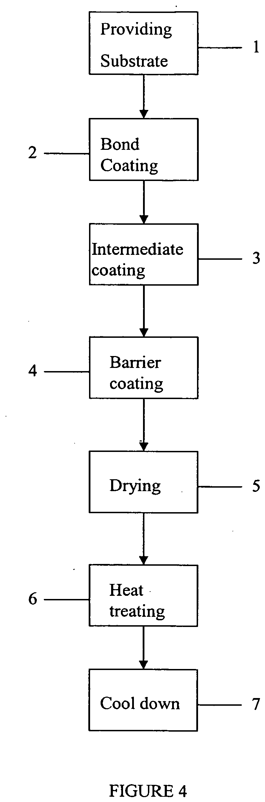

Referring to FIG. 4, the method(s) for applying the protective coatings described herein improve the overall adhesion and uniformity of the protective coatings upon the substrate. For purposes of illustration, and not to be taken in a limiting sense, the method may be described in a series of steps, some of which may be optional, and whose order may be changed dependent upon factors such as, but not limited to, the intended application, process conditions, and the like. The method generally comprises providing a substrate as described above at step 1 in FIG. 4. The substrate may include an optional bond coat layer 12 disposed between the substrate 10 and the aforementioned optional intermediate layer 14 as shown at step 2 in FIG. 4. The optional intermediate layer 14 may be disposed between the optional bond coat layer 12 and the aforementioned protective layer 16 or between the substrate 10 and the aforementioned bond coat layer 12 as shown at step 3 in FIG. 4.

The optional bond coat layer 12 may be applied to the silicon containing substrate 10 by any suitable manner known in the art, such as, but not limited to, thermal spraying, slurry coating, vapor deposition (chemical and physical), combinations comprising at least one of the foregoing methods, and the like. The optional intermediate layer 14 may also be applied to the substrate 10 or optional bond coat layer 12 by these same methods, and combinations, as known in the art.

The protective layer 16 is applied using a slurry dip coating technique. The slurry dip coating technique generally comprises dipping the silicon containing substrate, with or without the optional bond coat layer 12 and intermediate layers 14, into a slurry. The slurry may comprise an aqueous solution, a source of an oxide of a rare earth element, and one or more transient fluid additives. The aqueous solution may comprise any fluid compatible with the source of hafnium oxide, transient fluid additives and the substrate and its layers such as a solution comprising the rare earth element and their oxides such as, but not limited to, La, Gd, Sm, Lu, Yb, Er, Pr, Pm, Dy, Ho, Eu and mixtures thereof. Preferably, a solution comprising hafnium oxide and/or hafnia is used. The aqueous solution may also serve as the source of the oxide of a rare earth element by including one or more metal ion containing soluble salts. In the alternative, one of the aforementioned rare earth elements may be added to the aqueous solution and reacted to form the source of the oxide of the rare earth metal. Preferably, hafnium nitrate or hafnium acetate is.added to the aqueous solution to react and form hafnium oxide.

Transient fluid additives are used to promote grain growth and eliminate the formation of pores between grains. It has been discovered that adding the additives described below eliminate pore formation and promote grain growth allowing for improved adhesion. The transient fluid additives comprise a silica based material or a titania based material. Such silica and titania sources may include, but are not limited to, a precursor solution, a colloid, a suspension, a powder, and the like. Representative sources of silica are selected from the group consisting of silicon oxide, lithium silicate, fumed silica powder, colloidal silica and combinations comprising at least one of the foregoing. Whether silica or titania is employed, it is recognized that the particle size can influence positively the adhesion between the layers, for example, between the protective coating and the optional intermediate layer or optional bond coat or silicon containing substrate. The-transient fluid additive comprises 0.1 percent to 10 percent by weight of the slurry, and preferably 0.5 percent to 8 percent by weight of the slurry, and most preferably 1 percent to 5 percent by weight of the slurry. In the case of using lithium silicate as the transient fluid additive and hafnium oxide as the source of the oxide of a rare earth element, for example, lithium silicate decomposes to form silicon oxide that reacts with the hafnium oxide forming a layer of hafnium silicate between the grains of hafnium oxide as well as between the hafnium oxide and silicon. As such, the reaction product of the transient fluid additive and refractory metal oxides of the protective layer effectively eliminate pore formation between the grains while also promoting grain growth and improving adhesion.

The silicon containing substrate 10, and optional bond coat layer 12 and intermediate layer 14, is dipped into the slurry to form a base coat of the intended protective coating 16 as shown at step 4 in FIG. 4. Once the base coat forms, the coated substrate may be dried for 12 hours (hrs) to 36 hrs, and preferably for 18 hrs to 30 hrs, and most preferably for 24 hours at an ambient temperature, for example, room temperature as shown at step 5 in FIG. 4. Once dried, the coated silicon containing substrate is heat treated to a temperature of 400°C, at a rate of 3°C per minute, and the temperature is maintained for a time period of 3 hrs as shown at step 6 in FIG. 4. After that time, the temperature is elevated to 1350°C, at a rate of 3°C per minute, and the temperature is maintained for a time period of 7 hrs. Afterwards, the silicon containing substrate may be cooled at a rate of 5°C per minute to 15°C per minute, and preferably 10°C per minute, until achieving an ambient temperature, for example, room temperature, as shown at step 7 in FIG. 4.

While most examples cited in this patent application deal with environmental barrier coatings (EBCs) applied to silicon-containing ceramic substrates, the substrates may be made of any ceramic compounds or refractory metals and nickel-based superalloys. The methods of the present invention relate to methods for the deposition of protective coatings upon complex shaped parts. These complex shaped parts are generally subjected to high temperature, aqueous and chemically harsh environments. Typically, such complex shaped parts are difficult, if not impossible at times, to coat efficiently by line-of-sight processes of the prior art. The geometry of the complex shaped part makes it difficult to coat by either a plasma gun or by gaseous precursor species in conventional physical deposition techniques. While focusing upon complex shaped parts that cannot be easily or efficiently coated by thermal spray/physical vapor deposition routes, the non-line-of-sight coating methods outlined in the present invention may serve as, for example, (i) a low cost method for processing and/or repairing coatings that are conventionally made by air plasma spray/electron beam-physical vapor deposition processes or (ii) a method to apply thin coatings of required dimensional tolerance upon complex shaped parts.

It is to be understood that the invention is not limited to the illustrations described and shown herein, which are deemed to be merely illustrative of the best modes of carrying out the invention, and which are susceptible to modification of form, size, arrangement of parts, and details of operation. The invention rather is intended to encompass all such modifications which are within its scope as defined by the claims.

## Claims

1. A method for depositing a protective coating (16) upon a substrate (10) of a gas turbine engine component, comprising the steps of:
dipping a substrate into a slurry, said slurry comprising an aqueous solution, at least one refractory metal oxide, and at least one transient fluid additive for promoting grain growth and eliminating formation of pores between grains present in an amount of 0.1 percent to 10 percent by weight of said slurry, wherein said at least one transient fluid additive comprises a silica based material selected from the group consisting of silicon oxide, lithium silicate, fumed silica powder and colloidal silica, or a titania based material;
heat treating said substrate (10); and
cooling said substrate to form a protective coating (16) thereon: **characterised in that**
said heat treating comprises the following steps:
heating said substrate (10) to a first temperature of 400 °C at a rate of 3°C per minute;
maintaining said first temperature for three hours;
heating said substrate from said first temperature to a second temperature of 1350°C at a rate of 3°C per minute; and
maintaining said second temperature for seven hours.

2. The method of claim 1, further comprising applying a bond (12) coat to said substrate prior to said dipping step.

3. The method of claim 2, wherein said substrate is a silicon-containing substrate and said bond coat comprises at least one of: silicon, hafnium oxide and hafnium silicon oxide.

4. The method of claim 2 or 3, further comprising applying an intermediate layer (14) upon said bond coat prior to said dipping step.

5. The method of claim 4, wherein said substrate is a silicon-containing substrate and said intermediate layer (14) comprises a material selected from the group consisting of HfSiO₄, BaSiO₃, SrSiO₃, aluminum silicate, yttrium silicate, rare earth silicates, mullite, alkaline earth aluminosilicates of barium, alkaline earth aluminosilicates of strontium and mixtures thereof.

6. The method of claim 4, wherein said bond coat comprises at least one of: silicon, hafnium oxide and hafnium silicon oxide.

7. The method of any preceding claim, further comprising the step of drying said substrate before said heat treating step.

8. The method of claim 7, wherein drying comprises exposing said substrate to the atmosphere for twenty-four hours.

9. The method of any preceding claim, wherein cooling comprises lowering a temperature at a rate of 10°C per minute until achieving an ambient temperature.

10. The method of any preceding claim, wherein said at least one refractory metal oxide comprises 50 mol. % to 100 mol. % of a first refractory metal oxide and up to 50 mol. % of at least one second refractory metal oxide comprising a metal selected from the group consisting of hafnium, zirconium, titanium, niobium, tantalum, cerium, yttrium, scandium, aluminum, silicon, barium, strontium, scandium, lanthanum, gadolinium, samarium, luteium, ytterbium, europium, praseodymium, dysprosium, erbium, promethium and holmium.

## Patentansprüche

1. Verfahren zum Auftragen einer Schutzschicht (16) auf einem Substrat (10) einer Gasturbinentriebwerkkomponente, das die folgenden Schritte umfasst:
Eintauchen eines Substrats in eine Aufschlämmung, wobei die Aufschlämmung eine wässrige Lösung, mindestens ein feuerfestes Metalloxid und mindestens ein Übergangsfluidadditiv zur Förderung des Kornwachstums und zur Beseitigung der Porenbildung zwischen Körnern, die in einer Menge von 0,1 bis 10 Gewichtsprozent der Aufschlämmung vorliegen, umfasst, wobei das mindestens eine Übergangsfluidadditiv ein Material auf Siliciumdioxidbasis umfasst, das aus der Gruppe bestehend aus Siliciumoxid, Lithiumsilicat, pyrogenem Siliciumdioxidpulver und kolloidalem Siliciumdioxid oder einem Material auf Titandioxidbasis ausgewählt ist;
Wärmebehandeln des Substrats (10); und
Abkühlen des Substrats, um eine Schutzschicht (16) darauf zu bilden, **dadurch gekennzeichnet, dass**
das Wärmebehandeln die folgenden Schritte umfasst:
Erhitzen des Substrats (10) auf eine erste Temperatur in Höhe von 400 °C mit einer Geschwindigkeit von 3 °C pro Minute;
Halten der ersten Temperatur für drei Stunden;
Erhitzen des Substrats von der ersten Temperatur auf eine zweite Temperatur in Höhe von 1350 °C mit einer Geschwindigkeit von 3 °C pro Minute; und
Halten der zweiten Temperatur für sieben Stunden.

2. Verfahren nach Anspruch 1, ferner umfassend das Aufbringen einer Haftschicht (12) auf das Substrat vor dem Eintauchschritt.

3. Verfahren nach Anspruch 2, wobei das Substrat ein Silicium enthaltendes Substrat ist und die Haftschicht mindestens eines von Silicium, Hafniumoxid und Hafniumsiliciumoxid umfasst.

4. Verfahren nach Anspruch 2 oder 3, ferner umfassend das Aufbringen einer Zwischenschicht (14) auf der Haftschicht vor dem Eintauchschritt.

5. Verfahren nach Anspruch 4, wobei das Substrat ein Silicium enthaltendes Substrat ist und die Zwischenschicht (14) ein Material umfasst, das aus der Gruppe bestehend aus HfSiO₄, BaSiO₃, SrSiO₃, Aluminiumsilikat, Yttriumsilikat, seltenen Erdsilikaten, Mullit, Erdalkalialuminosilikaten von Barium, Erdalkalialuminosilikaten von Strontium und Gemischen davon ausgewählt ist.

6. Verfahren nach Anspruch 4, wobei die Haftschicht mindestens eines der Folgenden umfasst: Silicium, Hafniumoxid und Hafniumsiliciumoxid.

7. Verfahren nach einem der vorhergehenden Ansprüche, ferner umfassend den Schritt des Trocknens des Substrats vor dem Wärmebehandlungsschritt.

8. Verfahren nach Anspruch 7, wobei das Trocknen umfasst, das Substrat vierundzwanzig Stunden der Atmosphäre auszusetzen.

9. Verfahren nach einem der vorhergehenden Ansprüche, wobei das Kühlen das Senken einer Temperatur mit einer Geschwindigkeit von 10 °C pro Minute bis zum Erreichen einer Umgebungstemperatur umfasst.

10. Verfahren nach einem der vorhergehenden Ansprüche, wobei das mindestens eine feuerfeste Metalloxid 50 Mol.-% bis 100 Mol.-% eines ersten feuerfesten Metalloxids und bis zu 50 Mol.-% mindestens eines zweiten feuerfesten Metalloxids umfasst, das ein aus der Gruppe bestehend aus Hafnium, Zirkonium, Titan, Niob, Tantal, Cer, Yttrium, Scandium, Aluminium, Silicium, Barium, Strontium, Scandium, Lanthan, Gadolinium, Samarium, Luteium, Ytterbium, Europium, Praseodym, Dysprosium, Erbium, Promethium und Holmium ausgewähltes Metall umfasst.

## Revendications

1. Procédé de dépôt d'un revêtement protecteur (16) sur un substrat (10) d'un composant de moteur à turbine à gaz, comprenant les étapes :
d'immersion d'un substrat dans une bouillie, ladite bouillie comprenant une solution aqueuse, au moins un oxyde métallique réfractaire, et au moins un additif de fluide de transition pour promouvoir la croissance des grains et éliminer la formation de pores entre les grains présents en une quantité allant de 0,1 % à 10 % en poids de ladite bouillie, dans lequel ledit au moins un additif de fluide de transition comprend un matériau à base de silice choisi dans le groupe constitué par l'oxyde de silicium, le silicate de lithium, la poudre de silice pyrogénée et la silice colloïdale, ou un matériau à base de dioxyde de titane ;
de traitement thermique dudit substrat (10) ; et
de refroidissement dudit substrat pour former un revêtement protecteur (16) sur celui-ci ;
**caractérisé en ce que**
ledit traitement thermique comprend les étapes suivantes :
le chauffage dudit substrat (10) jusqu'à une première température de 400 °C à un rythme de 3 °C par minute ;
le maintien de ladite première température pendant 3 heures ;
le chauffage dudit premier substrat de ladite première température jusqu'à une seconde température de 1 350 °C à un rythme de 3 °C par minute ; et
le maintien de ladite seconde température pendant sept heures.

2. Procédé selon la revendication 1, comprenant en outre l'application d'une couche de liaison (12) sur ledit substrat avant ladite étape d'immersion.

3. Procédé selon la revendication 2, dans lequel ledit substrat est un substrat contenant du silicium et ladite couche de liaison comprend au moins l'un : du silicium, de l'oxyde d'hafnium et de l'oxyde d'hafnium-silicium.

4. Procédé selon la revendication 2 ou 3, comprenant en outre l'application d'une couche intermédiaire (14) sur ladite couche de liaison avant ladite étape d'immersion.

5. Procédé selon la revendication 4, dans lequel ledit substrat est un substrat contenant du silicium et ladite couche intermédiaire (14) comprend un matériau choisi dans le groupe constitué par le HfSiO₄, le BaSiO₃, le SrSiO₃, le silicate d'aluminium, le silicate d'yttrium, les silicates de terres rares, la mullite, les aluminosilicates alcalinoterreux de baryum, les aluminosilicates alcalinoterreux de strontium et les mélanges de ceux-ci.

6. Procédé selon la revendication 4, dans lequel ladite couche de liaison comprend au moins l'un : du silicium, de l'oxyde d'hafnium et de l'oxyde d'hafnium-silicium.

7. Procédé selon une quelconque revendication précédente, comprenant en outre l'étape de séchage dudit substrat avant ladite étape de traitement thermique.

8. Procédé selon la revendication 7, dans lequel le séchage comprend l'exposition dudit substrat à l'air ambiant pendant vingt-quatre heures.

9. Procédé selon une quelconque revendication précédente, dans lequel le refroidissement comprend l'abaissement de la température à un rythme de 10 °C par minute jusqu'à ce que la température ambiante soit atteinte.

10. Procédé selon une quelconque revendication précédente, dans lequel ledit au moins un oxyde métallique réfractaire comprend de 50 % en mole à 100 % en mole d'un premier oxyde métallique réfractaire et jusqu'à 50 % en mole d'au moins un second oxyde métallique réfractaire comprenant un métal choisi dans le groupe constitué par l'hafnium, le zirconium, le titane, le niobium, le tantale, le cérium, l'yttrium, le scandium, l'aluminium, le silicium, le baryum, le strontium, le lanthane, le gadolinium, le samarium, le lutécium, l'ytterbium, l'europium, le praséodyme, le dysprosium, l'erbium, le prométhium et l'holmium.
